# EUROPÄISCHE PATENTSCHRIFT

(11) **EP 4 093 650 B1**
(45) Veröffentlichungstag und Bekanntmachung des Hinweises auf die Patenterteilung: **17.01.2024**
(21) Anmeldenummer: 21700910.9
(22) Anmeldetag: 18.01.2021
(51) Int. Cl.: B62D 7/15, B60K 17/35, B60K 23/08, B62D 9/00

(54) **VERFAHREN ZUR STEUERUNG EINES KRAFTFAHRZEUGES BEI LANGSAMEN GESCHWINDIGKEITEN MITTELS ANTRIEBSDIFFERENZMOMENT AN DER HINTERACHSE**
METHOD FOR CONTROLLING A MOTOR VEHICLE AT LOW SPEEDS BY MEANS OF DIFFERENTIAL DRIVE TORQUE AT THE REAR AXLE
PROCÉDÉ DE COMMANDE D'UN VÉHICULE AUTOMOBILE À FAIBLES VITESSES AU MOYEN D'UN COUPLE D'ENTRAÎNEMENT DIFFÉRENTIEL AU NIVEAU DE L'ESSIEU ARRIÈRE

(30) Priorität: 23.01.2020 DE 102020101587
(43) Veröffentlichungstag der Anmeldung: 30.11.2022
(73) Patentinhaber: thyssenkrupp Presta AG, 9492 Eschen (LI); thyssenkrupp AG, 45143 Essen (DE)
(72) Erfinder: LAPIS, Leonard, 9466 Sennwald (CH); POLMANS, Kristof, 6464 Tarrenz (AT); MIANO, Carlo Mario, 9492 Eschen (LI)
(74) Vertreter: thyssenkrupp Intellectual Property GmbH
(86) Internationale Anmeldenummer: PCT/EP2021/050884
(87) Internationale Veröffentlichungsnummer: WO 2021/148334

(56) Entgegenhaltungen:
- DE-A1- 4 408 747
- JP-A- S61 200 065
- JP-A- 2007 269 063
- US-B1- 6 481 524

## Beschreibung

Die vorliegende Erfindung betrifft ein Verfahren zur Steuerung eines Steer-by-Wire-Lenksystems für ein Kraftfahrzeug mit den Merkmalen des Oberbegriffs des Anspruchs 1 und ein Kraftfahrzeug, das dazu ausgebildet ist, dieses Verfahren auszuführen.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen. Das Dokument JP2007269063 A offenbart ein Verfahren zur Steuerung eines Steer-by-Wire-Lenksystems für ein Kraftfahrzeug, wobei das Kraftfahrzeug zwei Achsen mit jeweils zwei Rädern umfasst, wobei die vorderen beiden Räder mittels einer Vorderradlenkung lenkbar sind und über eine zweite Lenkstange eines Lenksystems der Vorderradlenkung miteinander verbunden sind, die hinteren beiden Räder mittels einer Hinterradlenkung lenkbar sind und über eine erste Lenkstange eines Lenksystems der Hinterradlenkung miteinander verbunden sind und das Kraftfahrzeug einen einzigen Radantrieb umfasst, der einer der beiden Achsen zugeordnet ist und die beiden Räder der entsprechenden Achse über ein Differential antreibt, wobei das Kraftfahrzeug ein inboard- Bremssystem umfasst, und das Verfahren folgende Schritte umfasst: - Überprüfen der Kraftfahrzeuggeschwindigkeit, - Für den Fall, dass eine Kraftfahrzeuggeschwindigkeit kleiner einer definierten Kraftfahrzeuggeschwindigkeit vorliegt, Aktivieren einer Hinterachslenkung.

Bei niedrigen Geschwindigkeiten beispielsweise unter 40 km/h wie z. B. beim Rangieren und Einparken des Kraftfahrzeuges ist es von Vorteil eine Hinterachslenkung zur Begünstigung der Manövrierfähigkeit und Verkleinerung des Wendekreises einzusetzen.

Es ist Aufgabe der vorliegenden Erfindung, ein Verfahren zur Steuerung eines Steer-by-Wire-Lenksystems für ein Kraftfahrzeug anzugeben, das ohne Modifikation des Antriebs eine Hinterachslenkung bei niedrigen Geschwindigkeiten ermöglicht.

Diese Aufgabe wird von einem Verfahren zur Steuerung eines Steer-by-Wire-Lenksystems mit den Merkmalen des Anspruchs 1 und einem Steer-by-Wire-Lenksystem, das dazu ausgelegt ist, ein solches Verfahren auszuführen, gelöst. Weitere vorteilhafte Ausbildungen der Erfindung sind den Unteransprüchen zu entnehmen.

Demnach ist ein Verfahren zur Steuerung eines Steer-by-Wire-Lenksystems für ein Kraftfahrzeug vorgesehen, wobei das Kraftfahrzeug zwei Achsen mit jeweils zwei Rädern umfasst, wobei die vorderen beiden Räder mittels einer Vorderradlenkung lenkbar sind und über eine zweite Lenkstange eines Lenksystems der Vorderradlenkung miteinander verbunden sind, die hinteren beiden Räder mittels einer Hinterradlenkung lenkbar sind und über eine erste Lenkstange eines Lenksystems der Hinterradlenkung miteinander verbunden sind und das Kraftfahrzeug einen einzigen Radantrieb umfasst, der einer der beiden Achsen zugeordnet ist und die beiden Räder der entsprechenden Achse über ein Differential antreibt, wobei das Kraftfahrzeug ein inboard-Bremssystem umfasst, und das Verfahren folgende Schritte umfasst:
- Überprüfen der Kraftfahrzeuggeschwindigkeit,
- Für den Fall, dass eine Kraftfahrzeuggeschwindigkeit kleiner einer definierten Kraftfahrzeuggeschwindigkeit vorliegt, Aktivieren einer Hinterachslenkung,
- wobei bei aktiver Hinterachslenkung folgende Schritte ausgeführt werden:
- Deaktivieren der Hinterradlenkung,
- Bestimmen einer Sollposition der ersten Lenkstange mittels eines Soll-Radlenkwinkels der Hinterräder,
- Bestimmen eines Differenzantriebsmomentes zwischen den beiden Hinterrädern zum Erreichen der Sollposition mittels einer Steuereinheit.

Die niedrige Kraftfahrzeuggeschwindigkeit gemäß der vorliegenden Lösung ist vorzugsweise kleiner als 50km/h, weiter bevorzugt kleiner als 45km/h und besonders bevorzugt kleiner als 40 km/h.

Zusätzlich oder alternativ kann zur Überprüfung oder Überwachung der Kraftfahrzeuggeschwindigkeit eine Querbeschleunigung des Kraftfahrzeugs als Parameter zum Aktivieren der Hinterachslenkung dienen.

Bei einer Hinterachslenkung gemäß der vorliegenden Erfindung handelt es sich um ein Torque Vectoring-Hinterachsgetriebe. Beim Torque-Vectoring wird ein Antriebsmoment zwischen einem linken und einem rechten Fahrzeugrad mittels eines speziell ausgebildeten Differenzialgetriebes verteilt, um auf diese Weise dem Untersteuern oder Übersteuern entgegenzuwirken. So wird bei einer instabilen Fahrsituation ein Rad abgebremst, während die Antriebskraft an das Rad geleitet wird, welches die größte Giermomentreduktion aufweist, das heißt, kommt es zum Untersteuern, beaufschlagt die Steuerung das kurvenäußere Rad über eine separate Kupplung mit mehr Antriebskraft, sodass das Fahrzeug in die Kurve "hineingeschoben" wird. Durch eine individuelle Verteilung des Antriebsmoments auf die Räder der Hinterachse erzeugt das Torque Vectoring-Hinterachsgetriebe ein Giermoment - also ein Moment um die Hochachse des Fahrzeugs - das sowohl die Agilität als auch die Stabilität verbessern kann. Durch eine Verteilung des Antriebsmoments auf die beiden Räder der Hinterachse wird ein zusätzliches Giermoment (Eindrehen) erzeugt, das die Lenkbewegung des Fahrzeugs vor allem bei der Kurveneinfahrt unterstützt. Auf diese Weise kann das Fahrzeug bei raschen Ausweichmanövern stabilisiert werden, ohne dass Räder abgebremst werden müssen.

Eine Hinterradlenkung gemäss der vorliegenden Erfindung weist einen Hinterradantrieb auf zur Ansteuerung der Hinterräder. Der Hinterradantrieb ist auf einer Hinterradachse angeordnet. Die Hinterradachse umfasst bezogen auf eine Fahrtrichtung ein linkes lenkbares Hinterrad und ein rechtes lenkbares Hinterrad, die beispielsweise über eine Zahnstange eines Zahnstangenlenkgetriebes miteinander verbunden sind. Bei dem Schritt des Deaktivierens der Hinterradlenkung wird die Ansteuerung der Hinterräder abgeschaltet, sodass eine freie Bewegung der beiden Hinterräder ermöglicht wird.

Die Hinterachslenkung wird ohne Modifikation eines bestehenden Antriebs implementiert, indem ein Differenzantriebsmoment zwischen den Hinterrädern die erste Zahnstange verlagert und ein Giermoment um die Hochachse des Kraftfahrzeuges erzeugt und somit ein Lenkmoment einleitet. Durch die Lenkung über die Hinterachse wird das Kraftfahrzeug besonders manövrierfähig, was beim Einparken von besonderem Vorteil ist.

In einem Ausführungsbeispiel ist der Radantrieb an der Vorderachse angeordnet und das Verfahren umfasst folgende Schritte:
- Erzeugen des Differenzantriebsmomentes zwischen den beiden Hinterrädern durch Abbremsen eines Hinterrades,
- Erhöhen eines vom Radantrieb der Vorderachse bereitgestellten Drehmoments zur Kompensation eines durch das Abbremsen des zu bremsenden Hinterrads hervorgerufenen Geschwindigkeitsverlusts des Kraftfahrzeuges.

In die Berechnung für das Differenzantriebsmoment fließen die Fahrwerkgeometrie, die Eigenschaften des Bremssystems und das Vorzeichen der Soll-Zahnstangenposition ein, um ein zu bremsendes Hinterrad und den Bremsdruck zu bestimmen.

In einer weiteren Ausführungsform ist der Radantrieb ein Hinterradantrieb mit einem einzelnen Aktuator und einem offenen Differenzial und das Verfahren umfasst folgende Schritte:
- Erzeugen des Differenzantriebsmomentes zwischen den beiden Hinterrädern durch Abbremsen eines Hinterrades,
- Erhöhen eines vom Radantrieb der Hinterachse bereitgestellten Drehmoments zur Kompensation eines durch das Abbremsen des zu bremsenden Hinterrads hervorgerufenen Geschwindigkeitsverlusts des Kraftfahrzeuges.

Dabei gilt bevorzugt folgender Zusammenhang für eine Linkskurve:
T_{RL}+T_{RR}=2*T_{RR}+T_{ped,br}, wobei T_{RL} und T_{RR} das Drehmoment des linken und rechten Hinterrads sind und T_{ped,br} das in das zu bremsende linke Hinterrad eingeleitete Bremsmoment ist. Für eine Rechtskurve gilt entsprechend folgender Zusammenhang: T_{RR}+T_{RL}=2*T_{RL}+T_{ped,br}.

In einem weiteren Ausführungsbeispiel ist der Radantrieb ein Hinterradantrieb mit zwei Aktuatoren, die jeweils ein Hinterrad antreiben und das Verfahren umfasst folgende Schritte:
- Erzeugen des Differenzantriebsmomentes zwischen den beiden Hinterrädern durch Einleiten von unterschiedlichen Drehmomenten durch die beiden Aktuatoren.

In einer Linkskurve ist die Traktionskraft für das linke Hinterrad dann bevorzugt xN-ΔT/2 und die Traktionskraft für das rechte Hinterrad xN+ ΔT/2, wobei ΔT das Differenzantriebsmoment darstellt. Für eine Rechtskurve ist die Traktionskraft für das rechte Hinterrad bevorzugt xN-ΔT/2 und die Traktionskraft für das linke Hinterrad xN+ ΔT/2.

Ganz allgemein ist es vorteilhaft, für den Fall, dass eine Kraftfahrzeuggeschwindigkeit größer der definierten Kraftfahrzeuggeschwindigkeit ist, dass das Lenkgetriebe der Hinterachslenkung in Geradeausstellung arretiert wird, um eine gute Fahrzeugstabilität zu erreichen.

Die Arretierung erfolgt bevorzugt über eine Kupplung.

Es kann ganz allgemein vorgesehen sein, dass der Soll-Radlenkwinkel mittels eines von einem Fahrer in ein Lenkmittel eingeleiteten Lenkmoments bestimmt wird oder von einem autonomen oder halbautonomen Fahrbetrieb vorgegeben wird. Bei dem halbautonomen Fahrbetrieb, welcher auch als teilautonomer oder halbautomatischer Fahrbetrieb bezeichnet werden kann, bei welchem das Fahrzeug beispielsweise automatisch eingeparkt wird und/oder eine Spurhaltefunktion aktiviert werden kann und/oder eine Längsführung des Fahrzeuges wie beschleunigen und abbremsen von dem entsprechenden Assistenzsystem übernommen wird, wobei der Fahrer stets in den Fahrbetrieb eingreifen kann. Während bei einem autonomen Fahrbetrieb die Fahrzeugführung ohne Eingriff des Fahrers vollautomatisiert erfolgt.

Weiterhin wird die Aufgabe von einem Kraftfahrzeug gelöst, das dazu eingerichtet ist, das zuvor beschriebene Verfahren durchzuführen. Das Kraftfahrzeug weist bevorzugt einen hohen Nachlauf und einen niedrigen Lenkrollradius auf. Die Position der vertikalen Lenkachse definiert den Nachlauf und den Lenkrollradius. Als Nachlauf bzw. Nachlaufstrecke wird der Abstand in Längsrichtung zwischen Spurpunkt (dem Durchstoßpunkt der Lenkungsdrehachse durch die Fahrbahnfläche) und Radaufstandspunkt bezeichnet. Der Radaufstandspunkt liegt üblicherweise in Fahrtrichtung hinter dem Spurpunkt (positiver Nachlauf), so dass das Rad der Lenkungsdrehachse nachläuft. Es dreht sich somit von selbst in die gewünschte Fahrtrichtung. Durch den Nachlauf entsteht bei einem Lenkausschlag ein Rückstellmoment. Das Rückstellmoment bei Kurvenfahrt ist am Lenkrad spürbar. Es gibt dem Fahrer gemeinsam mit der Querbeschleunigung eine Rückmeldung über die Kurvenfahrt und über den Kontakt zwischen Reifen und Straße. Die Nachlaufstrecke oder der Nachlauf liegen bevorzugt zwischen 20mm und 50mm

Der Lenkrollradius bezeichnet an lenkbaren Achsen vom Fahrzeug den horizontalen Abstand zwischen Radmittelebene und dem Durchstoßpunkt der Spreizachse (Lenkdrehachse) durch die Fahrbahn. Der Lenkrollradius bestimmt Stärke und Richtung des Moments um die Spreizachse beim Bremsen. Bevorzugt liegt der Lenkrollradius in einem Bereich zwischen 0mm und 30mm.

Bevorzugte Ausführungsformen der Erfindung werden nachfolgend anhand der Zeichnung näher erläutert. Gleiche bzw. funktionsgleiche Bauteile sind dabei figurübergreifend mit denselben Bezugszeichen versehen. Es zeigen:
- Fig. 1:: eine schematische Darstellung eines Kraftfahrzeugs mit Hinterradantrieb-basiertem Torque Vectoring,
- Fig. 2:: eine schematische Darstellung eines Kraftfahrzeuges mit Vorderradantrieb aufweisend einen Antriebsmotor und ein Hinterradbremsen-basiertes Torque Vectoring,
- Fig. 3:: eine schematische Darstellung eines Kraftfahrzeuges mit Hinterradantrieb aufweisend einen Antriebsmotor und ein Hinterachs-basiertes Torque Vectoring, sowie
- Fig. 4:: ein Blockdiagramm einer Steuerung des Kraftfahrzeuges mit Hinterachs-basiertem Torque-Vectoring.

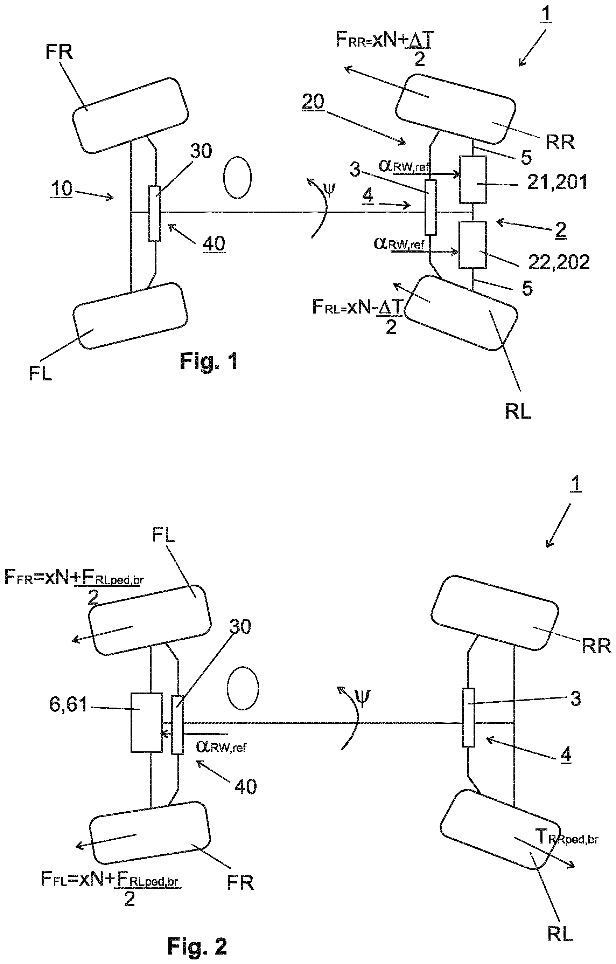

In Figur 1 ist schematisch ein Kraftfahrzeug 1 mit zwei Achsen 10,20 und vier Rädern FL,FR,RL,RR dargestellt, wobei lediglich die Hinterräder RL,RR antreibbar sind (Hinterradantrieb) und der Antrieb 2 der Hinterräder RL,RR auf einer Hinterachse 20 angeordnet ist. Der Antrieb 2 weist zwei separate Aktuatoren 21,22 auf. Ein linker Radantriebsmotor 202 ist in Fahrtrichtung links und ein rechter Radantriebsmotor 201 ist in Fahrtrichtung rechts angeordnet. Die Radantriebsmotoren 201,202 sind jeweils über Antriebswellen 5 mit den lenkbaren Hinterrädern RL,RR verbunden. Die lenkbaren Hinterräder RL,RR sind über eine Zahnstange 3 eines Zahnstangenlenkgetriebes 4 miteinander verbunden. Bei Verlagerung der Zahnstange 3 quer zur Fahrtrichtung nach rechts oder links werden die Räder RL,RR um einen jeweiligen Schwenkpunkt verschwenkt. Die Vorderräder FL,FR sind ebenfalls lenkbar und über eine zweite Zahnstange 30 eines zweiten Zahnstangenlenkgetriebes 40 miteinander verbunden.

Die Ansteuerung der Aktuatoren 21,22 erfolgt mittels eines Soll-Radlenkwinkel α_{RW,ref} der lenkbaren Hinterräder RL,RR. Die Hinterräder RL,RR werden derart angetrieben, dass ein Differenzmoment ΔT zwischen den Hinterrädern FL,FR entsteht, dass proportional zu dem Soll-Radlenkwinkel α_{RW,ref} bzw. einem Fahrerlenkwunsch ist. Mit anderen Worten, der Soll-Radlenkwinkel α_{RW,ref} der lenkbaren Hinterräder FL,FR fließt in die Steuerung des Hinterradantriebs ein. Beim Fahren einer Linkskurve, wie in Fig. 1 dargestellt, ist die Traktionskraft für das linke Hinterrad xN (z. B. 100N) -ΔT/2 und die Traktionskraft für das rechte Hinterrad xN+ ΔT/2. Das Differenzmoment führt zu einer Verlagerung der Zahnstange 3 an der Hinterachse 20 und zu einem Giermoment ψ um die Hochachse des Kraftfahrzeugs.

Fig. 2 zeigt ein weiteres Ausführungsbeispiel der Erfindung. Das Kraftfahrzeug 1 weist eine Vorderradlenkung und eine Hinterradlenkung sowie einen Vorderradantrieb 6 auf. Die Vorderräder FL,FR der Vorderradlenkung sind über eine zweite Zahnstange 30 eines zweiten Zahnstangenlenkgetriebes 40 miteinander verbunden. Die Hinterräder RL,RR der Hinterradlenkung sind über eine erste Zahnstange 3 eines ersten Zahnstangenlenkgetriebes 4 miteinander verbunden. Der Vorderradantrieb 6 weist einen einzelnen Aktuator 61 auf, insbesondere einen Elektromotor, der die Vorderräder FL,FR über ein Differenzial antreibt. Bei niedrigen Geschwindigkeiten wird zur Erhöhung der Manövrierfähigkeit ein Lenkmoment durch ein Abbremsen eines der Hinterräder RL,RR bereitgestellt. Das Bremssystem an der Hinterradachse ist an dem Antriebsstrang angeordnet. Ein von Bremssystem erzeugtes Bremsmoment wird über die Antriebswelle des Hinterradantriebs auf das zu bremsende Rad übertragen. Das Bremssystem wird daher als "inboard-Bremssystem" bezeichnet. In Abhängigkeit von dem Sollradlenkwinkel α_{RW,ref} der Hinterräder RL,RR wird eine Sollzahnstangenposition S_{R,ref} der ersten Zahnstange 3 berechnet. Die Zahnstangenposition wird mittels einer Steuerung geregelt, die eine Software zur Arbitration umfasst. In diese Software fließen die Fahrwerkgeometrie, die Eigenschaften des Bremssystems und das Vorzeichen der Sollzahnstangenposition S_{R,ref} ein, um ein zu bremsendes Hinterrad RR,RL und den für den Bremsvorgang benötigten Bremsdruck zu bestimmen. Damit das Kraftfahrzeug 1 durch den Bremsvorgang nicht an Geschwindigkeit verliert, stellt der Vorderradantrieb ein zusätzliches Drehmoment bereit, das dem Bremsmoment T_{RRped,br} entspricht und den Geschwindigkeitsverlust kompensiert. Eine Position eines Gaspedals des Kraftfahrzeuges, vorzugsweise ein Gaspedalwinkel, sowie eine Position eines Bremspedals, vorzugsweise ein Bremspedalwinkel werden an die Steuerung übermittelt, um eine Beschleunigung oder ein Abbremsen des Kraftfahrzeuges zu erkennen, um das zusätzlich benötigte Drehmoment zu berechnen.

Fig. 2 zeigt das Fahren einer Linkskurve. Die Soll-Zahnstangenposition S_{R,ref} und der Sollradlenkwinkel α_{RW,ref} fließen in die Berechnung des vom linken Hinterrad RL aufzubringenden Bremsmomentes T_{RLped,br} mit ein.

Durch das Abbremsen des einen Hinterrades wird ein Giermoment um die Hochachse erzeugt und die erste Zahnstange 3 des ersten Zahnstangenlenkgetriebes 4 verlagert, wodurch das Kraftfahrzeug 1 einlenkt. Eine Antriebssteuerung des Vorderradantriebs 6 steuert entsprechend das rechte Vorderrad FR und linke Vorderrad FL an, welche jeweils eine Traktionskraft von xN (z. B. 100N)+ F_{RLped,br}/2 aufbringen, wobei F_{RLped,br}, die das Bremsmoment T_{RLped,br} kompensierende Kraft ist. Die Vorderachslenkung kann durch ein mittels des Aktuators erzeugtes Drehmoment unterstützend wirken. Das Kraftfahrzeug wird mittels Hinterradbremsen-basiertem Torque-Vectoring, ohne Antrieb an der Hinterachse, gelenkt.

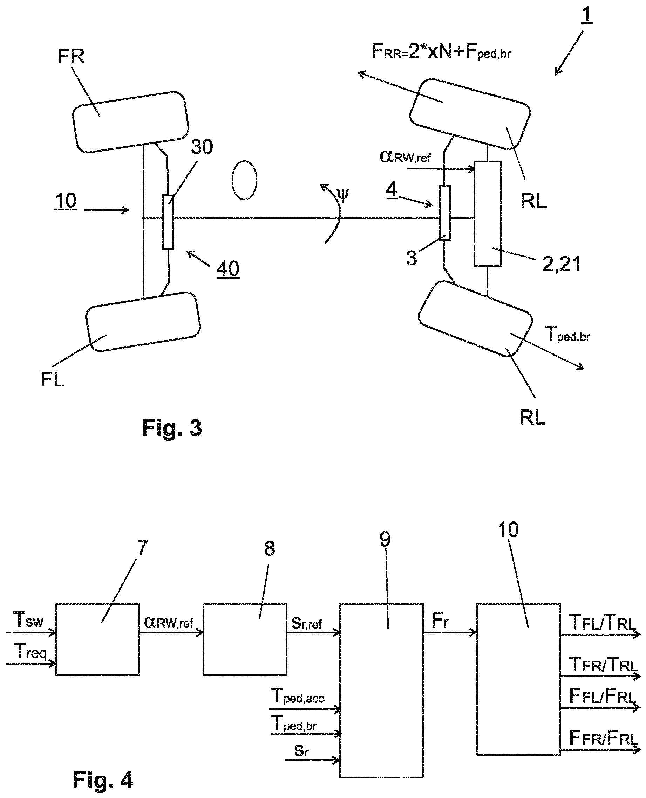

In der Fig. 3 ist ein Kraftfahrzeug 1 mit Hinterradantrieb 2 sowie Vorderrad- und Hinterradlenkung dargestellt. Die Vorderräder FL,FR der Vorderradlenkung sind über eine zweite Zahnstange 30 eines zweiten Zahnstangenlenkgetriebes 40 miteinander verbunden. Die Hinterräder RL,RR der Hinterradlenkung sind über eine zweite Zahnstange 3 eines zweiten Zahnstangenlenkgetriebes 4 miteinander verbunden. Der Hinterradantrieb weist einen einzelnen Aktuator 2 auf, insbesondere einen Elektromotor, der die Hinterräder RL,RR über ein offenes Differenzial (ohne Sperreinrichtung) oder ein teilweise offenes Differenzial antreibt.

Bei niedrigen Geschwindigkeiten wird zur Erhöhung der Manövrierfähigkeit ein Lenkmoment und ein Giermoment um die Hochachse des Kraftfahrzeuges durch Abbremsen eines der Hinterräder RL bereitgestellt.

In Abhängigkeit von dem Soll-Radlenkwinkel α_{RW,ref} wird eine Soll-Zahnstangenposition S_{R,ref} der ersten Zahnstange 3 berechnet. Die Zahnstangenposition wird mittels einer Steuerung geregelt, die eine Software zur Arbitration umfasst. In diese Software fließen die Fahrwerkgeometrie, die Eigenschaften des Bremssystem und das Vorzeichen der Soll-Zahnstangenposition S_{R,ref} ein, um ein zu bremsendes Hinterrad und den Bremsdruck zu bestimmen. Damit das Kraftfahrzeug 1 durch den Bremsvorgang nicht an Geschwindigkeit verliert, stellt der Aktuator 21 des Hinterradantriebs 2 ein zusätzliches Drehmoment bereit, das den Geschwindigkeitsverlust kompensiert. Eine Position eines Gaspedals des Kraftfahrzeuges, vorzugsweise ein Gaspedalwinkel α, sowie eine Position eines Bremspedals, vorzugsweise ein Bremspedalwinkel werden an die Steuerung übermittelt, um eine Beschleunigung oder ein Abbremsen des Kraftfahrzeuges zu erkennen um das zusätzliche Drehmoment zu berechnen.

Für die in Fig. 3 dargestellte Linkskurve gilt folgender Zusammenhang:
T_{RL}+T_{RR}=2*T_{RR}+T_{RLped,br}, wobei T_{RL} und T_{RR} das Drehmoment des linken und rechten Hinterrads sind und T_{RLped,br} das in das zu bremsende Hinterrad RL eingeleitete Bremsmoment ist. F_{RR} ist somit gleich 2*×N+F_{RLped,br}.

Das Bremssystem an der Hinterradachse ist an dem Antriebsstrang angeordnet. Ein von Bremssystem erzeugtes Bremsmoment wird über die Antriebswelle des Hinterradantriebs 2 auf das zu bremsende Rad RL übertragen. Das Bremssystem wird daher als "inboard-Bremssystem" bezeichnet. Die auf die Räder wirkenden Kräfte bestehen daher hauptsächlich aus dem über die Antriebswelle übertragenen Drehmoment und der Reibungskraft der Berührungsstelle des Rades mit der Straße.

Die resultierende Kraft wirkt auf die Radmitte, wodurch mit einem kleineren Drehmoment ein stärkeres Lenkmoment erzielt werden kann, als dies herkömmlicherweise mit einem größeren Spreizungswinkel (King Pin Inclination) der Fall ist.

Das Hinterradbremsen-basierte Torque-Vectoring stellt in diesem Fall eine besonders günstige und einfache Hinterachslenkung dar, die eine wendige Steuerung des Kraftfahrzeuges bei geringer Geschwindigkeit erlaubt.

Bei höheren Geschwindigkeiten, insbesondere bei Geschwindigkeiten über 40 km/h ist es bevorzugt, wenn das Lenkgetriebe der Hinterachslenkung in Geradeausstellung (Mittelstellung) arretiert wird, um ein stabiles Fahrverhalten zu erlangen. Die Arretierung erfolgt bevorzugt mittels einer Arretierungseinrichtung für die Hinterachse, die diese frei gibt oder arretiert in Abhängigkeit von vorgegebenen Betriebszuständen des Fahrzeuges. Insbesondere soll die Lenkung bei Überschreiten einer vordefinierten Geschwindigkeit des Fahrzeuges arretiert werden.

Die Verwendung eines Antriebdrehmomentunterschieds zwischen dem linken und rechten Hinterrad zur Steuerung des Kraftfahrzeuges wird bei Überschreiten einer vordefinierten Geschwindigkeit des Fahrzeuges und/oder bei Überschreiten einer Maximalquerbeschleunigung.

Um einen maximalen Effekt durch den Drehmomentunterschied zu erzielen, muss die Aufhängung der Räder und die sich daraus ergebende Lenkgeometrie entsprechend gewählt werden. Dafür müssen insbesondere der Nachlauf und der Lenkrollradius definiert werden, um das aus dem Differenzmoment resultierende Giermoment zu maximieren.

In der Figur 4 ist ein Blockdiagramm einer Steuerung des Kraftfahrzeuges mit Hinterachs-basiertem Torque-Vectoring für geringe Fahrzeuggeschwindigkeiten dargestellt. In einer ersten Einheit 7 werden das in ein Lenkrad vom Fahrer eingeleitete Lenkmoment Tsw oder ein von einem autonomen Fahrbetrieb angefragte Soll-Drehmoment T_{req} in einen Soll-Radlenkwinkel α_{RW,ref} der Hinterräder RL,RR umgerechnet. Eine zweite Einheit 8 bestimmt aus dem Soll-Radlenkwinkel α_{RW,ref} eine Soll-Zahnstangenposition S_{R,ref}. Die Soll-Zahnstangenposition S_{R,ref} wird mit einer gemessenen Ist-Zahnstangenposition S_{R} verglichen. Aus der Soll-Zahnstangenposition S_{R,ref} und dem Brems-Drehmoment T_{ped,br} und/oder dem Beschleunigungs-Drehmoment T_{ped,acc} der Hinterräder werden in einer dritten Einheit 9 die die Zahnstangenkraft F_{Rack} bestimmt. In einer vierten Einheit 10 wird daraus dann bestimmt, wie sich das Kraftfahrzeug und die Fahrzeugräder im Falle einer konstanten Geschwindigkeit und Kurvenfahrt, einer Beschleunigung und Kurvenfahrt sowie während eines Bremsvorgangs in einer Kurvenfahrt verhält und anschließend für den jeweiligen Fahrzeugzustand implementiert.

Wie in den zuvor beschriebenen Ausführungsformen aufgezeigt, kann der Antrieb an der Vorderachse oder der Hinterachse angeordnet sein. Der Antrieb umfasst wenigstens einen Aktuator.

Ein Lenkvorgang kann sowohl von einem Fahrer durch Drehen eines Lenkrades oder Bewegen eines sonstigen Lenkmittels als auch durch eine Steuerung eines autonomen oder halbautonomen Kraftfahrzeuges eingeleitet werden.

## Patentansprüche

1. Verfahren zur Steuerung eines Steer-by-Wire-Lenksystems für ein Kraftfahrzeug (1), wobei das Kraftfahrzeug (1) zwei Achsen (10,20) mit jeweils zwei Rädern (RL,RR,FL,FR) umfasst, wobei die vorderen beiden Räder (FL,FR) mittels einer Vorderradlenkung lenkbar sind und über eine zweite Lenkstange (30) eines Lenksystems der Vorderradlenkung miteinander verbunden sind, die hinteren beiden Räder (RL,RR) mittels einer Hinterradlenkung lenkbar sind und über eine erste Lenkstange (3) eines Lenksystems der Hinterradlenkung miteinander verbunden sind und das Kraftfahrzeug (1) einen einzigen Radantrieb (2,6) umfasst, der einer der beiden Achsen (10,20) zugeordnet ist und die beiden Räder der entsprechenden Achse über ein Differential antreibt, wobei das Kraftfahrzeug (1) ein inboard- Bremssystem umfasst, und das Verfahren folgende Schritte umfasst:
• Überprüfen der Kraftfahrzeuggeschwindigkeit,
• Für den Fall, dass eine Kraftfahrzeuggeschwindigkeit kleiner einer definierten Kraftfahrzeuggeschwindigkeit vorliegt, Aktivieren einer Hinterachslenkung,
• wobei bei aktiver Hinterachslenkung folgende Schritte ausgeführt werden:
• Deaktivieren der Hinterradlenkung,
• Bestimmen einer Sollposition der ersten Lenkstange (S_{R,ref}) mittels eines Soll-Radlenkwinkels (α_{RW,ref}) für die hinteren beiden Räder (RL,RR),
• Bestimmen eines Differenzantriebsmomentes (ΔT) zwischen den beiden Hinterrädern (RL,RR) zum Erreichen der Sollposition (S_{R,ref}) mittels einer Steuereinheit.

2. Verfahren nach Anspruch 1, **dadurch gekennzeichnet, dass** der Radantrieb (6) an der Vorderachse (10) angeordnet ist und das Verfahren folgende Schritte umfasst:
• Erzeugen des Differenzantriebsmomentes (ΔT) zwischen den beiden Hinterrädern (RI,RR) durch Abbremsen eines Hinterrades (RL,RR),
• Erhöhen eines vom Radantrieb (6) bereitgestellten Drehmoments zur Kompensation eines durch das Abbremsen des zu bremsenden Hinterrads (FL,FR) hervorgerufenen Geschwindigkeitsverlusts des Kraftfahrzeuges (1).

3. Verfahren nach Anspruch 1, **dadurch gekennzeichnet, dass** der Radantrieb (2) ein Hinterradantrieb mit einem einzelnen Aktuator (21) und einem offenen Differenzial ist und das Verfahren folgende Schritte umfasst:
• Erzeugen des Differenzantriebsmomentes (ΔT) zwischen den beiden Hinterrädern (RL,RR) durch Abbremsen eines Hinterrades (RL,RR),
• Erhöhen eines vom Radantrieb (2) bereitgestellten Drehmoments zur Kompensation eines durch das Abbremsen des zu bremsenden Hinterrads (FL,FR) hervorgerufenen Geschwindigkeitsverlusts des Kraftfahrzeuges (1).

4. Verfahren nach Anspruch 3, **dadurch gekennzeichnet, dass** folgender Zusammenhang für eine Linkskurve gilt:
T_{RL}+T_{RR}=2*T_{RR}+T_{ped,br}, wobei T_{RL} und T_{RR} das Drehmoment des linken und rechten Hinterrads (FL,FR) sind und T_{ped,br} das in das zu bremsende linke Hinterrad (RL) eingeleitete Bremsmoment ist.

5. Verfahren nach Anspruch 1, **dadurch gekennzeichnet, dass** der Radantrieb (2) ein Hinterradantrieb mit zwei Aktuatoren (201,202) ist, die jeweils ein Hinterrad (RL,RR) antreiben und das Verfahren folgende Schritte umfasst:
• Erzeugen des Differenzantriebsmomentes (ΔT) zwischen den beiden Hinterrädern (RL,RR) durch Einleiten von unterschiedlichen Drehmomenten durch die beiden Aktuatoren (201,202).

6. Verfahren nach Anspruch 5, **dadurch gekennzeichnet, dass** bei einer Linkskurve die Traktionskraft für das linke Hinterrad (RL) xN-ΔT/2 und die Traktionskraft für das rechte Hinterrad (RR) xN+ ΔT/2 ist.

7. Verfahren nach einem der vorhergehenden Ansprüche, **dadurch gekennzeichnet, dass** das Verfahren folgenden Schritt umfasst:
• Für den Fall, dass eine Kraftfahrzeuggeschwindigkeit größer als eine definierte Kraftfahrzeuggeschwindigkeit ist, Arretieren des Lenkgetriebes der Hinterachslenkung in Geradeausstellung.

8. Verfahren nach einem der vorhergehenden Ansprüche, **dadurch gekennzeichnet, dass** der Soll-Radlenkwinkel (α_{RW,ref}) mittels eines von einem Fahrer in ein Lenkmittel eingeleiteten Lenkmoments (Tsw) bestimmt wird.

9. Verfahren nach einem der vorhergehenden Ansprüche 1 bis 7, **dadurch gekennzeichnet, dass** der Soll-Radlenkwinkel (α_{RW,ref}) von einem autonomen oder halbautonomen Fahrbetrieb vorgegeben wird.

10. Kraftfahrzeug (1), das dazu eingerichtet ist, das Verfahren nach einem der Ansprüche 1 bis 9 durchzuführen.

## Claims

1. Method for controlling a steer-by-wire steering system for a motor vehicle (1), wherein the motor vehicle (1) comprises two axles (10,20) with two wheels (RL,RR,FL,FR) each, wherein the two front wheels (FL,FR) can be steered by means of front-wheel steering and are connected to one another via a second steering rod (30) of a steering system of the front-wheel steering; the two rear wheels (RL,RR) can be steered by means of rear-wheel steering and are connected to one another via a first steering rod (3) of a steering system of the rear-wheel steering, and the motor vehicle (1) comprises a single wheel drive (2,6) which is assigned to one of the two axles (10,20) and drives the two wheels of the corresponding axle via a differential, wherein the motor vehicle (1) comprises an inboard braking system, and the method comprises the following steps:
• checking the motor vehicle speed,
• in the event that a motor vehicle speed should be slower than a defined motor vehicle speed, activation of rear-axle steering,
• wherein with active rear-axle steering, the following steps are carried out:
• deactivation of rear-wheel steering,
• determination of a reference position of the first steering rod (S_{R,ref}) by means of a reference wheel steering angle (α_{RW,ref}) of the rear wheels (RL,RR),
• determination of a differential drive torque (ΔT) between the two rear wheels (RL,RR), in order to reach the reference position (S_{R,ref}) by means of a control unit.

2. Method according to Claim 1, **characterized in that** the wheel drive (6) is arranged on the front axle (10) and the method comprises the following steps:
• generation of the differential drive torque (ΔT) between the two rear wheels (RI,RR) by braking a rear wheel (RL,RR),
• increase in a torque provided by the wheel drive (6) to compensate for a loss of speed by the motor vehicle (1) caused by the braking of the rear wheel (FL,FR) being braked.

3. Method according to Claim 1, **characterized in that** the wheel drive (2) is a rear-wheel drive with a single actuator (21) and an open differential and the method comprises the following steps:
• generation of the differential drive torque (ΔT) between the two rear wheels (RL,RR) by braking a rear wheel (RL,RR),
• increase in a torque provided by the wheel drive (2) to compensate for a loss of speed by the motor vehicle (1) caused by the braking of the rear wheel (FL,FR) being braked.

4. Method according to Claim 3, **characterized in that** the following equation applies to a left-hand bend:
T_{RL}+T_{RR}=2*T_{RR}+T_{ped,br}, where T_{RL} and T_{RR} are the torque of the left and right rear wheel (FL,FR) and T_{ped,br} is the braking torque introduced to the left rear wheel (RL) being braked.

5. Method according to Claim 1, **characterized in that** the wheel drive (2) is a rear-wheel drive with two actuators (201,202), which each drive a rear wheel (RL,RR), and the method comprises the following steps:
• generation of the differential drive torque (ΔT) between the two rear wheels (RL,RR) through the introduction of different torques by the two actuators (201,202).

6. Method according to Claim 5, **characterized in that** in a left-hand bend, the tractive force for the left rear wheel (RL) is xN-ΔT/2 and the tractive force for the right rear wheel (RR) is xN+ ΔT/2.

7. Method according to one of the preceding claims, **characterized in that** the method comprises the following step:
• in the event that a motor vehicle speed is greater than a defined motor vehicle speed, locking of the steering gear of the rear axle steering in the straight-line position.

8. Method according to one of the preceding claims, **characterized in that** the reference wheel steering angle (α_{RW,ref}) is determined by means of a steering torque (Tsw) introduced into a steering means by a driver.

9. Method according to one of the preceding Claims 1 to 7, **characterized in that** the reference wheel steering angle (α_{RW,ref}) is specified by an autonomous or semi-autonomous driving mode.

10. Motor vehicle (1) which is set up to implement the method according to Claims 1 to 9.

## Revendications

1. Procédé de commande d'un système de direction électrique pour un véhicule automobile (1), dans lequel le véhicule automobile (1) comprend deux essieux (10,20) avec deux roues (RL,RR,FL,FR) chacun, dans lequel les deux roues avant (FL,FR) peuvent être dirigées au moyen d'une roue avant directrice et sont reliées l'une à l'autre par une deuxième tige de direction (30) d'un système de direction de la roue avant directrice ; les deux roues arrière (RL,RR) peuvent être dirigées au moyen d'une direction arrière et sont reliées l'une à l'autre par une première tige de direction (3) d'un système de direction des roues arrière, et le véhicule à moteur (1) comprend une transmission à roue unique (2,6) qui est affectée à l'un des deux essieux (10,20) et entraîne les deux roues de l'essieu correspondant par l'intermédiaire d'un différentiel, dans lequel le véhicule à moteur (1) comprend un système de freinage intérieur, et le procédé comprend les étapes suivantes:
- vérification de la vitesse du véhicule,
- si la vitesse du véhicule est inférieure à une vitesse définie, activation de la direction de l'essieu arrière,
- Dans ce cas, les étapes suivantes sont exécutées :
- désactivation de la direction de l'essieu arrière,
- détermination d'une position de référence de la première tige de direction (S_{R,ref}) au moyen d'un angle de braquage de référence (α_{RW,ref}) des roues arrière (RL,RR),
- détermination d'un couple d'entraînement différentiel (ΔT) entre les deux roues arrière (RL,RR), afin d'atteindre la position de référence (S_{R,ref}) au moyen d'une unité de commande.

2. Procédé selon la revendication 1, **caractérisé par le fait que** l'entraînement des roues (6) est disposé sur l'essieu avant (10) et que le procédé comprend les étapes suivantes:
- génération du couple différentiel (ΔT) entre les deux roues arrière (RI,RR) par freinage d'une roue arrière (RL,RR),
- augmentation du couple fourni par l'entraînement des roues (6) pour compenser la perte de vitesse du véhicule à moteur (1) causée par le freinage de la roue arrière (FL,FR) freinée.

3. Procédé selon la revendication 1, **caractérisé par le fait que** la transmission de roue (2) est une transmission de roue arrière avec un seul actionneur (21) et un différentiel ouvert et que le procédé comprend les étapes suivantes:
- génération du couple d'entraînement différentiel (ΔT) entre les deux roues arrière (RL,RR) par le freinage d'une roue arrière (RL,RR),
- augmentation du couple fourni par l'entraînement des roues (2) pour compenser la perte de vitesse du véhicule à moteur (1) causée par le freinage de la roue arrière (FL,FR) freinée.

4. Procédé selon la revendication 3, **caractérisé en ce que** l'équation suivante s'applique à un virage à gauche:
T_{RL}+T_{RR}=2*T_{RR}+T_{ped,br}, où T_{RL} et T_{RR} sont les couples des roues arrière gauche et droite (FL,FR) et T_{ped,br} est le couple de freinage introduit à la roue arrière gauche (RL) en cours de freinage.

5. Procédé selon la revendication 1, **caractérisé par le fait que** l'entraînement des roues (2) est un entraînement des roues arrière avec deux actionneurs (201,202), qui entraînent chacun une roue arrière (RL,RR), et le procédé comprend les étapes suivantes:
- génération du couple d'entraînement différentiel (ΔT) entre les deux roues arrière (RL,RR) par l'introduction de couples différents par les deux actionneurs (201,202).

6. Procédé selon la revendication 5, **caractérisé par le fait que** dans un virage à gauche, la force de traction de la roue arrière gauche (RL) est xN-ΔT/2 et la force de traction de la roue arrière droite (RR) est xN+ ΔT/2.

7. Procédé selon l'une des revendications précédentes, **caractérisé en ce que** le procédé comprend l'étape suivante:
- dans le cas où la vitesse du véhicule automobile est supérieure à une vitesse définie du véhicule automobile, verrouillage du boîtier de direction de l'essieu arrière en position de ligne droite.

8. Procédé selon l'une des revendications précédentes, **caractérisé en ce que** l'angle de braquage de référence des roues (α_{RW,ref}) est déterminé au moyen d'un couple de braquage (Tsw) introduit dans un dispositif de direction par un conducteur.

9. Procédé selon l'une des revendications précédentes 1 à 7, **caractérisé en ce que** l'angle de braquage de référence des roues (α_{RW,ref}) est spécifié par un mode de conduite autonome ou semi-autonome.

10. Véhicule automobile (1) configuré pour mettre en oeuvre le procédé selon les revendications 1 à 9.
